# EUROPEAN PATENT SPECIFICATION

(11) **EP 2 624 356 B1**
(45) Date of publication and mention of the grant of the patent: **30.03.2016**
(21) Application number: 12183273.7
(22) Date of filing: 06.09.2012
(51) Int. Cl.: H01M 10/04, H01M 2/02

(54) **Secondary battery**
Sekundärbatterie
Batterie secondaire

(30) Priority: 31.01.2012 US 201261592873 P; 15.08.2012 US 201213586332
(43) Date of publication of application: 07.08.2013
(73) Proprietor: Samsung SDI Co., Ltd., Yongin-si, Gyeonggi-do (KR)
(72) Inventor: Park, Yong-Kyun, Yongin-si (Gyeinggi-do) (KR)
(74) Representative: Santarelli

(56) References cited:
- EP-A1- 1 187 237
- EP-A1- 2 296 205
- WO-A2-2010/093160
- JP-A- 2001 229 890
- JP-A- 2004 139 924
- KR-B1- 100 869 377
- US-A1- 2004 119 442
- US-A1- 2007 134 551
- US-A1- 2011 076 547

## Description

### BACKGROUND

### Field

An aspect of the present invention relates to a secondary battery.

### Description of the Related Art

In general, secondary batteries are used to supply energy to portable electronic devices. As such electronic devices are developed, the secondary batteries supplying energy to the devices require higher capacity and higher efficiency.

The external appearance of a secondary battery may change depending on an electronic device employing the secondary battery. As electronic devices such as smart phones have recently been developed, secondary batteries are frequently used, which have double width and long length rather than thin thickness, compared to previously used secondary batteries.

However, it is difficult to manufacture a secondary battery having double width and long length. In addition, the path along which electricity flows in such a secondary battery is extended, and therefore, the efficiency of energy consumption is decreased.

### SUMMARY

According to a first aspect of the invention there is provided a secondary battery comprising: a plurality of electrode assemblies arranged in a layer, adjacently to one another; an electrolyte; a case accommodating the electrode assemblies and the electrolyte; and a space portion located between an adjacent pair of the electrode assemblies, Spaced apart from one another.

The space portion is arranged to receive the electrolyte for supply to the pair of electrode assemblies.

The space portion is connected to an electrolyte injection port.

In an embodiment, the case comprises a plurality of accommodating portions, each accommodating portion being arranged to house a respective electrode assembly.

In an embodiment, each accommodating portion is formed to substantially correspond to the shape and/or size of the respective electrode assembly.

In an embodiment, a first sealing portion is provided between a respective pair of accommodating portions.

In an embodiment, the electrode assemblies are provided with first and second electrode tabs arranged to extend through at least one of the electrode assemblies to electrically connect the electrode assemblies to one another and to protrude from at least one side of the case.

In an embodiment, the first and second electrode tabs are arranged to extend through the first sealing portion.

In an embodiment the secondary battery is provided with at least one spacer disposed in the space portion between a respective pair of electrode assemblies to support the first and second electrode tabs.

In an embodiment, the at least one spacer is provided with a pair of recesses or a pair of through holes to receive the first and second electrode tabs.

In an embodiment, both ends of the first and second electrode tabs are arranged to protrude from the case.

In an embodiment, an electrolyte storage portion is provided for storing further electrolyte, the electrolyte storage portion being disposed between a pair of accommodating portions.

In an embodiment, the electrolyte storage portion is connected to an electrolyte injection port.

In an embodiment, a seal is provided between the electrolyte storage portion and each of the accommodating portions, wherein the seal may be opened by application of a force to the electrolyte storage portion.

In an embodiment, the case is provided with a safety device located in correspondence with the space portion. The safety device may for example be a safety device for exhausting gas from the case when the internal pressure with the case exceeds a predetermined value. Some embodiments seek to provide a secondary battery having improved energy efficiency by being manufactured to have a new structure.

Some embodiments seek to provide a secondary battery having improved process efficiency by simplifying a manufacturing process thereof.
Some embodiments seek to provide a pouch-type secondary battery having improved reliability and energy efficiency by being manufactured to have a new structure.

According to an embodiment of the present invention, there is provided a secondary battery including: an electrolyte; two or more electrode assemblies each having a first electrode plate, a second electrode plate opposite to the first electrode plate and a separator interposed between the first and second electrode plates; and a battery case for accommodating the electrolyte and the electrode assemblies, wherein neighboring electrode assemblies in the battery case are provided in parallel to each other.

In an embodiment the neighboring electrode assemblies may be spaced apart from each other so as to have a space portion therebetween, and the space portion may be connected to an electrolyte injection port.

In an embodiment, the electrode assemblies may include first and second electrode assemblies.

In an embodiment, the electrode assembly may include a first electrode tab provided to the first electrode plate and a second electrode tab provided to the second electrode plate. The first and second electrode tabs may be protruded to respective outer sides of the battery case.

The first and second electrode assemblies may have first and second electrode tabs respectively, and the first and second electrode tabs may extend from the second electrode assembly so as to protrude to the outside of the battery case via the first electrode assembly.

The secondary battery may further include a spacer provided between the first and second electrode assemblies, and first and second electrode-tab mounting portions on which the first and second electrode tabs are mounted, respectively, are provided to the spacer.

Each of the first and second electrode-tab mounting portions may be provided to have a step difference or may be provided in the shape of a through-hole.

The battery case may include one or more accommodating portions provided to correspond to the shape of the electrode assembly.

The accommodating portion may include first and second accommodating portions, and the first and second accommodating portions may be spaced apart from each other so as to respectively correspond to the shapes of the first and second electrode assemblies.

Each of the first and second electrode assemblies may include first and second electrode tabs extending in parallel therefrom. The first and second electrode assemblies may be arranged so that the first and second electrode tabs of the first electrode assembly extend in the opposite direction to the first and second electrode tabs of the second electrode assembly.

The battery case may further include an electrolyte storage portion in which the electrolyte is stored between the first and second electrode assemblies.

The battery case may further include an electrolyte injection portion, and the electrolyte injection portion may be connected to the electrolyte storage portion.

According to one or more embodiments of the present invention, it is possible to provide a secondary battery having improved energy efficiency by being manufactured to have a new structure.

Further, it is possible to provide a secondary battery having improved process efficiency by simplifying a manufacturing process thereof.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a secondary battery according to a first embodiment of the present invention.
FIG. 2 is an exploded perspective view of the secondary battery of FIG. 1.
FIG. 3 is a sectional view taken along line A-A of the secondary battery of FIG. 1.
FIG. 4 is an exploded perspective view of a secondary battery according to a second embodiment of the present invention.
FIG. 5A is a perspective view of an embodiment of a spacer of FIG. 4.
FIG. 5B is a front view of the spacer of FIG. 5A.
FIG. 6A is a perspective view of another embodiment of the spacer.
FIG. 6B is a front view of the spacer of FIG. 6A.
FIG. 7 is an exploded perspective view of a secondary battery according to a third embodiment of the present invention.
FIG. 8 is a sectional view of the secondary battery of FIG. 7.
FIG. 9A is a perspective view of a secondary battery according to a fourth embodiment of the present invention.
FIG. 9B is an exploded perspective view of the secondary battery of FIG. 9A.
FIG. 9C is an exploded perspective view of the secondary battery of FIG. 9A that includes a spacer according to an embodiment.
FIG. 9D is an exploded perspective view of the secondary battery of FIG. 9A that includes a spacer according to another embodiment.
FIG. 10 is a sectional view taken along line B-B of the secondary battery of FIG. 9A.
FIG. 11 is a perspective view of a secondary battery according to a fifth embodiment of the present invention.
FIG. 12 is a sectional view taken along line C-C of the secondary battery of FIG. 11.

### DETAILED DESCRIPTION

In the following detailed description, only certain exemplary embodiments of the present invention have been shown and described, simply by way of illustration. As those skilled in the art will realize, the described embodiments may be modified in various different ways, all without departing from the scope of the present invention as defined by the appended claims. Accordingly, the drawings and description are to be regarded as illustrative in nature and not restrictive. In addition, when an element is referred to as being "on" or "over" another element, it can be directly on or over the another element or be indirectly on or over the another element with one or more intervening elements interposed therebetween. Also, when an element is referred to as being "connected to" another element, it can be directly connected to the another element or be indirectly connected to the another element with one or more intervening elements interposed therebetween. Moreover, when an element is referred to as being "adjacent" to another element it will be appreciated that the element is arranged next to the other element without necessarily touching the other element. Hereinafter, like reference numerals refer to like elements.

Hereinafter, embodiments of the present invention will be described with reference to the accompanying drawings.

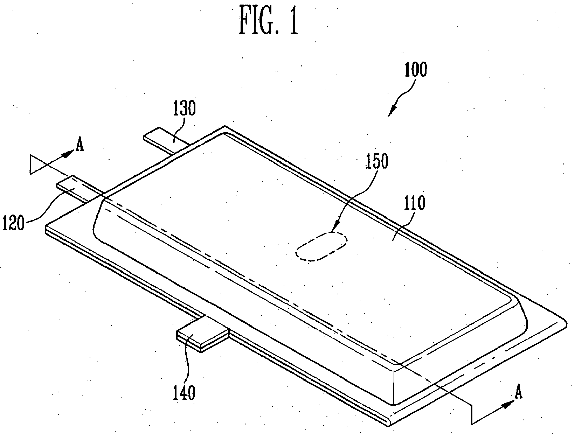

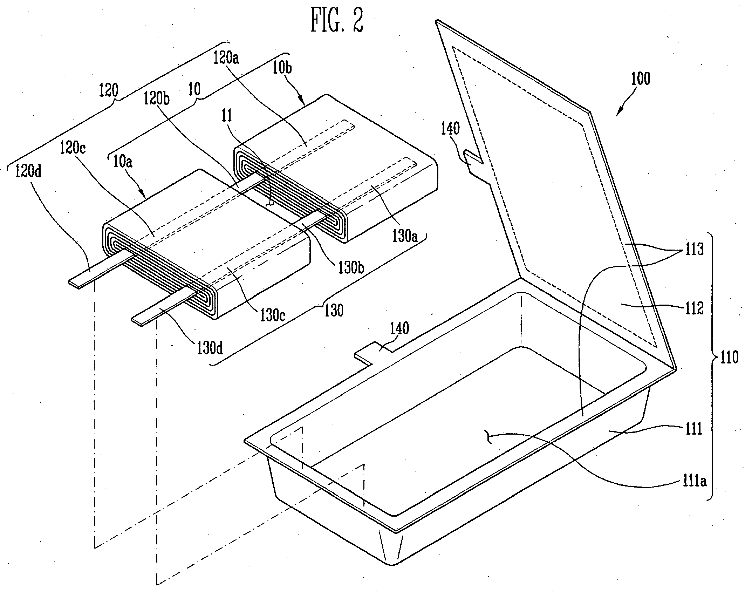

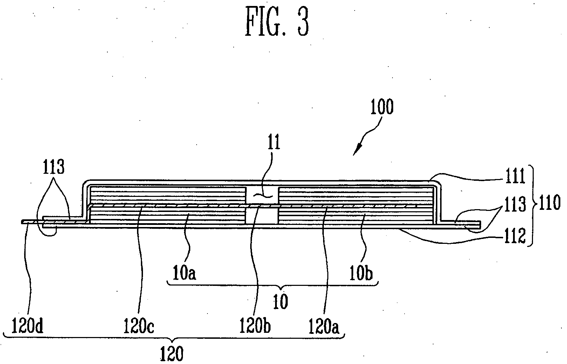

FIG. 1 is a perspective view of a secondary battery according to a first embodiment of the present invention. FIG. 2 is an exploded perspective view of the secondary battery of FIG. 1. FIG. 3 is a sectional view taken along line A-A of the secondary battery of FIG. 1.

The secondary battery 100 according to this embodiment includes an electrolyte; two or more electrode assemblies 10 each having a first electrode plate, a second electrode plate opposite to the first electrode plate, and a separator interposed between the first and second electrode plates; and a battery case 110 in which the electrolyte and the electrode assemblies are accommodated. In the battery case 110, neighboring electrode assemblies 110 may be arranged in parallel with each other.

The electrode assembly 10 is provided with first and second electrode plates having different polarities from each other, and a separator. For example, the first electrode plate may be a positive electrode plate formed by coating a positive electrode active material including lithium on a base plate, and the second electrode plate may be a negative electrode plate formed by coating a negative electrode active material including carbon on a base plate. The separator is interposed between the first and second electrode plates so as to prevent the first and second electrode plates from directly contacting one other. The separator may include a plurality of pores that constitute a path of ions or the electrolyte.

The electrolyte may be accommodated together with the electrode assemblies 10 in the battery case 110. In this case, the electrolyte facilitates the movement of current between the first and second electrode plates. For example, the electrolyte may include a lithium salt acting as a supply source of lithium ions and a non-aqueous organic solvent acting as a medium through which ions participating in an electrochemical reaction can move.

The battery case 110 includes a pouch composed of a main body 111 and a cover 112. In this embodiment, the main body has an accommodating portion 111 a that is a space for accommodating the electrode assemblies 10 and the electrolyte. The accommodating portion 111a in the main body 111 accommodates the electrode assemblies 10 and the electrolyte, and the main body 111 is sealed with the cover 112 so as to prevent the electrode assemblies 10 and the electrolyte from being separated therefrom. To this end, sealing portions 113 may be provided at edges of the main body 111 and the cover 112, corresponding to each other. The sealing portions 113 are thermally bonded in the state in which the main body 111 and the cover 112 are adhered closely to each other.

Generally, the external appearance of a secondary battery used as a power source of an electronic device may be determined according to the external appearance of the electronic device. Recently, a demand on secondary batteries of double width and longer length has been increased. A secondary battery having double width and long length is light in weight and small in size. However, the secondary battery is rapidly deteriorated, and therefore, the lifespan of the secondary battery is reduced. Specifically, it is not easy to perform a reversible electrochemical reaction between an electrode assembly and an electrolyte, which enables the reversible use of the secondary battery. Therefore, this results in deterioration of the secondary battery. An electrode assembly of the prior art manufactured to have double width and long length has a low permeation property of the electrolyte, and the electrolyte permeates into a partial section of the electrode assembly. Therefore, the movement of electrons or ions is unbalanced, which results in a side reaction. As a result, the secondary battery deteriorates.

One or more embodiments of the present invention provide a secondary battery in which the permeation property of an electrolyte with an electrode assembly is improved, so that it is possible to help to prevent the deterioration of the secondary battery and to thereby increase the lifespan of the secondary battery. In the secondary battery, having double width and long length, there is a reduced risk of having a region of the electrode assembly in which the electrolyte is not permeated. This helps to prevent the occurrence of a side reaction, and the secondary battery can be efficiently used.

The electrode assembly 10 may include first and second electrode assemblies 10a and 10b, and the first and second electrode assemblies 10a and 10b may be provided in parallel with each other in the battery case 110. The first and second electrode assemblies 10a and 10b are provided, in a layer, adjacent to each other while being spaced apart from each other, and a space portion 11 is provided between the first and second electrode assemblies 10a and 10b. The space portion 11 is connected to an electrolyte injection portion 140, and a safety member 150 may be further provided to the battery case 110.

The safety member 150 may be provided to at least one of the main body 111 and cover 112 of the battery case 110. For example, the safety member 150 may include a vent for exhausting gas when the internal pressure of the secondary battery 100 is a predetermined value or more. The safety member 150 prevents the secondary battery 100 from being exploded due to a sudden increase of the internal pressure, or the like, so that it is possible to improve the safety of the secondary battery 100.

The electrolyte injection portion 140 may be connected to an edge of the battery case 100 so as to act as a path along which the electrolyte is injected into the battery case 110. Since the electrolyte injection portion 140 is a part used to inject the electrolyte into the battery case 110, the electrolyte injection portion 140 may be provided at a central part of the battery case 110. The electrolyte injection portion 140 may be removed after the electrolyte is injected into the battery case 110 therethrough. Since the electrolyte injection portion 140 is provided for injection of the electrolyte into the battery case 110 therethrough, the electrolyte injection portion 140 may be provided in various shapes.

The electrolyte injection portion 140 may be connected to the space portion 11 between the first and second electrode assemblies 10a and 10b. The electrolyte is injected into the battery case 110 through the electrolyte injection portion 140 and then spread to both sides of the space portion 11. Thus, the electrolyte can permeate from the space portion 11 into the first and second electrode assemblies 10a and 10b. Since the electrolyte is more efficiently permeated into the first and second electrode assemblies 10a and 10b, the likelihood of having a region in which the electrolyte is not permeated into the first and second electrode assemblies 10a and 10b, is significantly reduced. The surplus of electrolyte remaining after being permeated into the first and second electrode assemblies 10a and 10b is provided in the space portion 11 between the first and second electrode assemblies 10a and 10b. The electrolyte provided in the space portion 11 is supplied to the first and second electrode assemblies 10a and 10b when the electrolyte is exhausted of the first and second electrode assemblies 10a and 10b by a plurality of charging/discharging operations of the secondary battery 100, and thus the lifespan of the secondary battery can be improved.

The electrode assembly 10 includes a first electrode tab 120 provided to the first electrode plate and a second electrode tab 130 provided to the second electrode plate. The first and second electrode tabs 120 and 130 may protrude to the outside of the battery case 110. For example, the first and second electrode assemblies 10a and 10b are provided with first and second electrode tabs 120 and 130, and the electrode tabs 120 and 130 may extend from the second electrode assembly 10b to protrude to the outside of the battery case 110 via the first electrode assembly 10a. The first and second electrode tabs 120 and 130 act as a path of current (or electrons) generated in the first and second electrode assemblies 10a and 10b. In this case, the first and second electrode tabs 120 and 130 may be sequentially divided into first to fourth portions 120a, 120b, 120c, 120d, 130a, 130b, 130c and 130d, respectively. The first portions 120a and 130a of the first and second electrode tabs 120 and 130 are connected to the first and second electrode plates of the second electrode assembly 10b. The second portions 120b and 130b of the first and second electrode tabs 120 and 130 extend to the outside of the second electrode assembly 10b so as to correspond to the space portion 11 between the first and second electrode assemblies 10a and 10b. The third portions 120c and 130c of the first and second electrode tabs 120 and 130 are connected to the first and second electrode plates of the first electrode assembly 10a, and the fourth portions 120d and 130d of the first and second electrode tabs 120 and 130 extend from the first electrode assembly 10a so as to be exposed to the outside of the battery case 110. For example, the first and second electrode tabs 120 and 130 may be positive and negative electrode tabs, respectively. The first and second electrode tabs 120 and 130 can electrically interconnect the first and second electrode assemblies 10a and 10b spaced apart from each other.

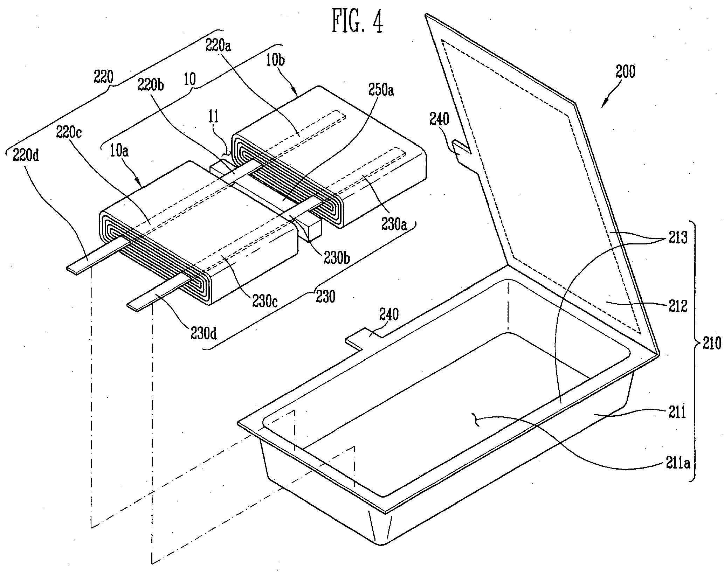

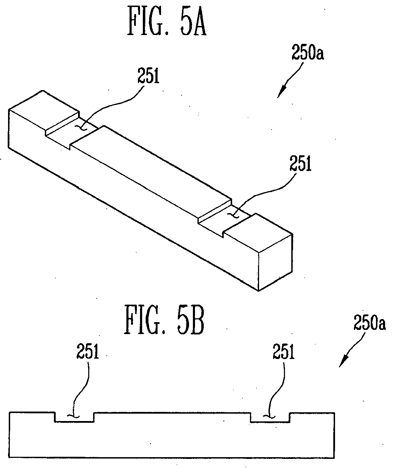

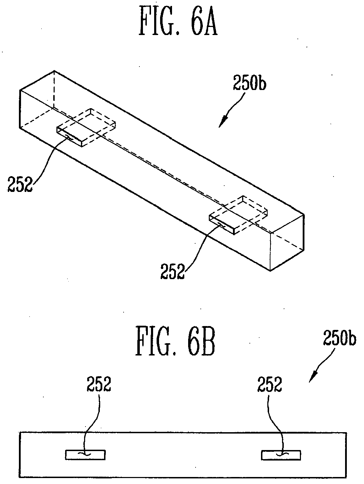

FIG 4 is an exploded perspective view of a secondary battery according to a second embodiment of the present invention. FIG. 5A is a perspective view of an embodiment of a spacer of FIG. 4. FIG. 5B is a front view of the spacer of FIG. 5A. FIG. 6A is a perspective view of another embodiment of the spacer. FIG. 6B is a front view of the spacer of FIG. 6A.

Referring to FIGS. 4 to 6B, alternatively in the second embodiment, the secondary battery 200 further includes at least one spacer 250a. The spacer 250a is provided between the first and second electrode assemblies 10a and 10b. The spacer 250a may be provided with first and second electrode-tab mounting portions 251 on which first and second electrode tabs 220 and 230 are mounted, respectively.. The first and second electrode assemblies 10a and 10b are accommodated in parallel in an accommodating portion 211a of a main body 211 of a battery case 210 and then sealed therein by a cover 212 of the battery case 210. Second portions 220b and 230b of the first and second electrode tabs 220 and 230 may be positioned in the space portion 11 between the first and second electrode assemblies 10a and 10b. In this case, an electrolyte injection portion 240 is provided at an edge of the battery case 210 so as to correspond to the space portion 11, and fourth portions 220d and 230d of the first and second electrode tabs 220 and 230 protrude to the outside of the battery case 210.

Although the spacer 250a shown in FIGS. 5A and 5B is used in the secondary battery of FIG 4, a spacer 250b shown in FIGS. 6A and 6B may be used in the secondary battery of FIG. 4. Hereinafter, the spacer 250a shown in FIGS. 5A and 5B is referred to as a first spacer 250a, and the spacer 250b according to another embodiment of the invention as shown in FIGS. 6A and 6B is referred to as a second spacer 250b.

The first or second spacer 250a or 250b may be provided between the first and second electrode assemblies 10a and 10b. In this case, the first or second spacer 250a or 250b comes into contact with the second portions 220b and 230b of the first and second electrode tabs 220 and 230, and first or second electrode-tab mounting portions 251 or 252 via which the second portions 220b and 230b of the first and second electrode tabs 220 and 230 pass, respectively, may be provided to the first or second spacer 250a or 250b. For example, the first or second electrode-tab mounting portion 251 or 252 may be provided to have a step difference forming a recess or may be provided in the shape of a through-hole.

The spacer 250a or 250b may be made of an insulating material for arrangement in the space portion 11 between the first and second electrode assemblies 10a and 10b. Thus, the spacer 250a or 250b insulates between the first and second electrode assemblies 10a and 10b from one another, so that it is possible to prevent the risk of a short circuit, or the like between the electrode assemblies. Further, since the spacer 250a or 250b enables the first and second electrode tabs 220 and 230 to be firmly fixed by supporting the first and second electrode tabs 220 and 230, current can smoothly flow through the first and second electrode tabs 220 and 230.

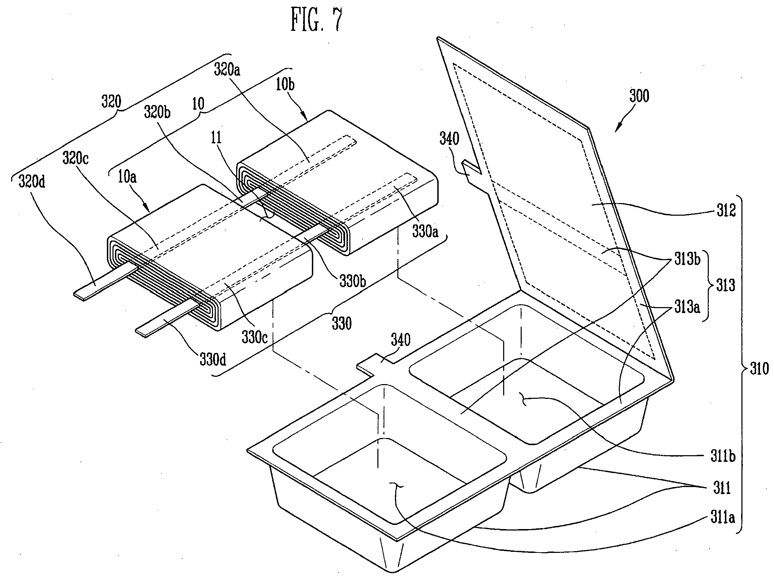

Hereinafter, further embodiments of the present invention will be described with reference to FIGS. 7 to 12. Components in these embodiments described with reference to FIGS. 7 to 12 are similar to those in the embodiment described with reference to FIGS. 1 to 6B, and therefore, their detailed descriptions will be omitted.

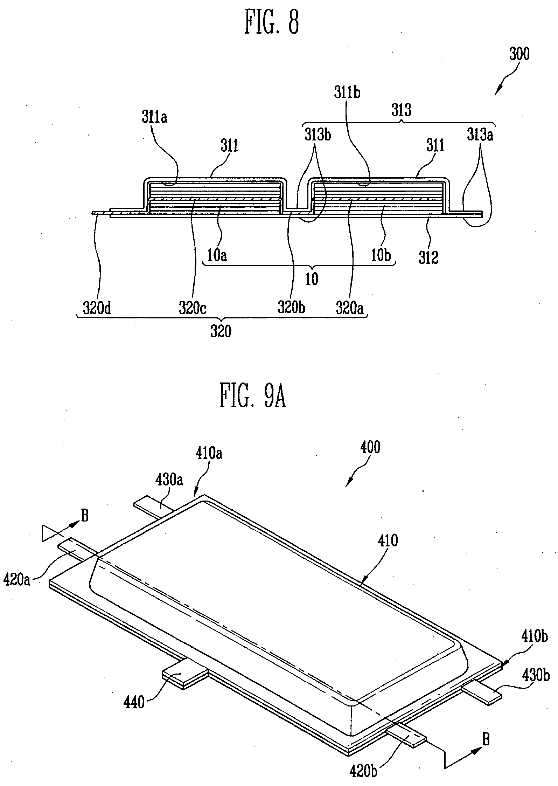

FIG. 7 is an exploded perspective view of a secondary battery according to a third embodiment of the present invention. FIG. 8 is a sectional view of the secondary battery of FIG. 7.

Referring to FIG 7 and 8, in the secondary battery 300 according to this embodiment, a battery case 310 may include one or more accommodating portions 311a and 311 b arranged to correspond to the shape of the respective electrode assembly 10. The accommodating portions 311 a and 311b are provided in a main body 311 so as to accommodate the first and second electrode assemblies 10a and 10b, respectively. The accommodating portions 311a and 311b include first and second accommodating portions 311a and 311b. The first and second accommodating portions 311 a and 311 b are spaced apart from each other, and may be provided to respectively correspond to the sizes of the first and second electrode assemblies 10a and 10b.

External sealing portions 313a are respectively provided at edges of the main body 311 and a cover 312 in the battery case 310 so as to seal the battery case 310. In this example, an internal sealing portion 313b may be provided between the first and second accommodating portions 311 a and 311b, and thus the first and second accommodating portions 311 a and 311 b can be spaced apart from each other by the internal sealing portion 313b.

An electrolyte injection portion 340 may be provided in parallel with the internal sealing portion 313b at an outside of the battery case 310. The secondary battery 300 is sealed by thermally bonding the external sealing portions 313a except the part connected to the electrolyte injection portion 340, and an electrolyte is then injected into the battery case 310 through the electrolyte injection portion 340. Subsequently, the internal sealing portion 313b is sealed, thereby manufacturing the secondary battery 300.

The battery case 310 according to this embodiment is composed of the plurality of accommodating portions 311a and 311b arranged to correspond to the size of the respective electrode assembly 10, so that the respective electrode assembly 10 can be stably fixed in the battery case 310. Thus, the electrode assembly 10 is stably fixed without moving due to an external impact such as a vibration or drop, thereby preventing an electrical short circuit, or the like. Further, the internal sealing portion 313b is further provided between the first and second accommodating portions 311a and 311b, thereby improving the sealing performance of the secondary battery 300.

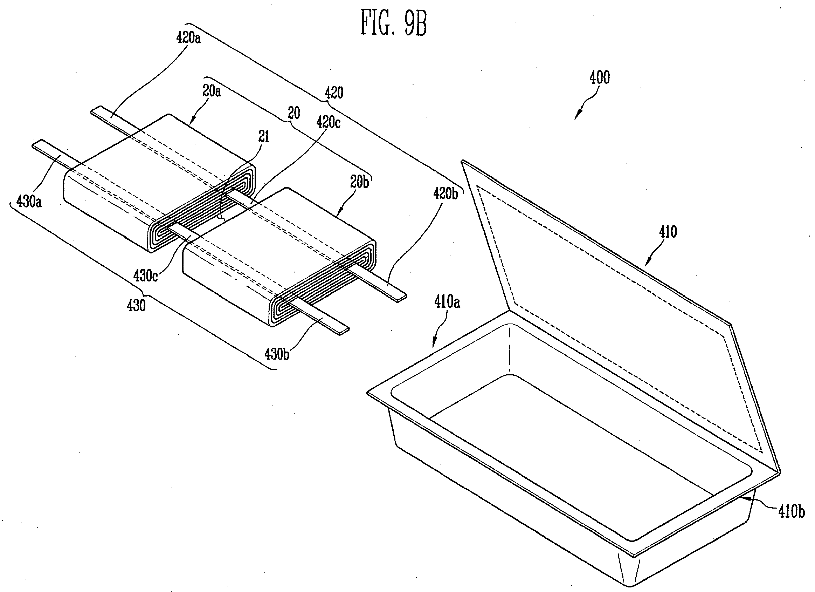

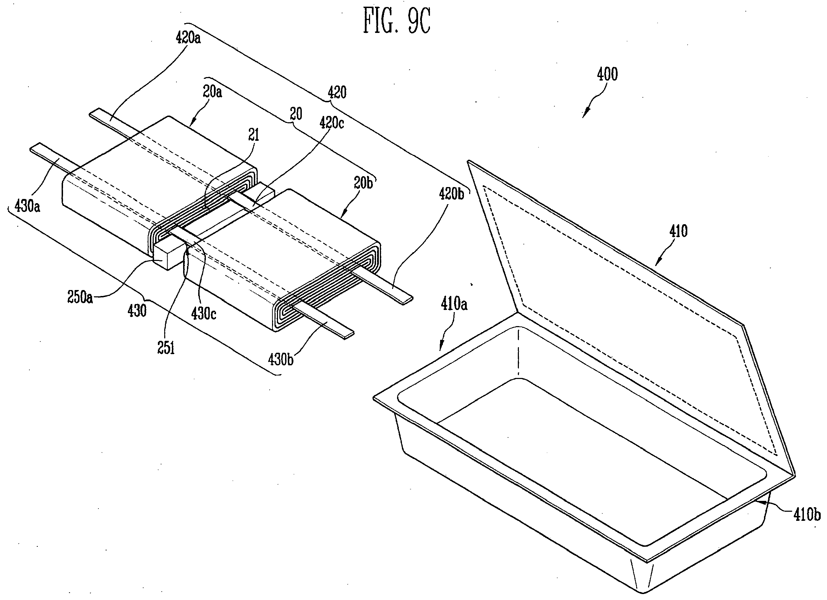

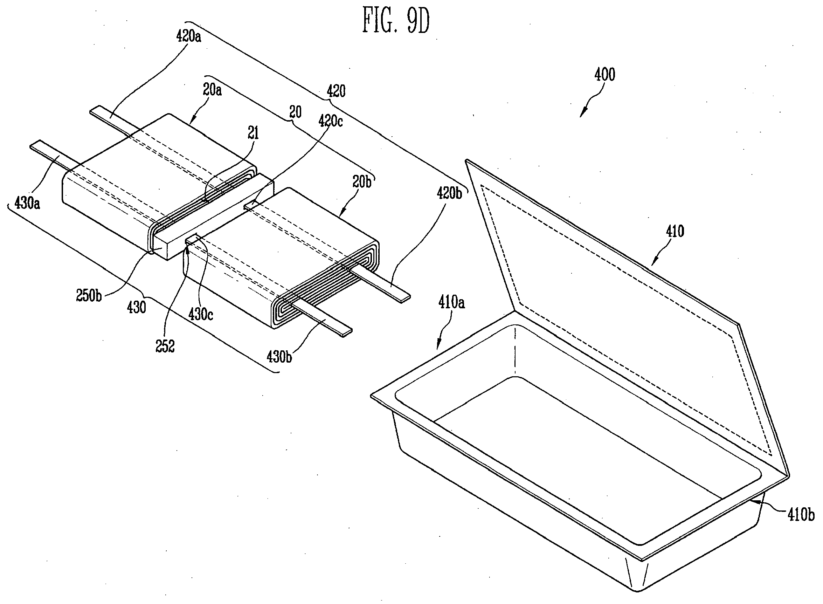

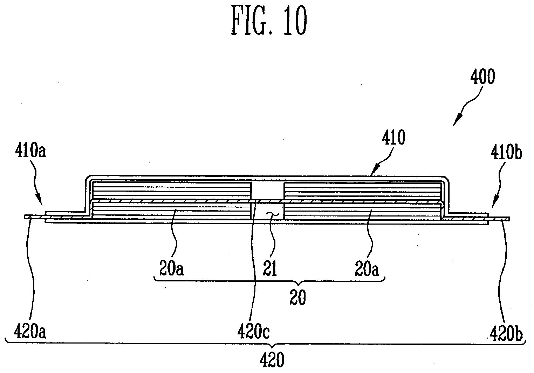

FIG. 9A is a perspective view of a secondary battery according to a fourth embodiment of the present invention. FIG. 9B is an exploded perspective view of the secondary battery of FIG. 9A. FIG. 9C is an exploded perspective view of the secondary battery of FIG. 9A that includes a spacer according to one embodiment. FIG. 9D is an exploded perspective view of the secondary battery of FIG. 9A that includes a spacer according to another embodiment. FIG. 10 is a sectional view taken along line B-B of the secondary battery of FIG. 9A.

Referring to FIGS. 9A to 10, the secondary battery 400 according to this embodiment may include a pair of first and second electrode tabs 420a and 430a protruding from one end 410a of a battery case 410, and a pair of first and second electrode tabs 420b and 430b protruding from the other end 410b opposite to the one end 410a of the battery case 410. First and second electrode assemblies 20a and 20b may be arranged in parallel while being spaced apart from each other with a space portion 21 interposed therebetween in the battery case 410.

First and second electrode tabs 420 and 430 may be provided to the first and second electrode assemblies 20a and 20b. The first and second electrode tabs 420 and 430 may be provided to connect the first and second electrode assemblies 20a and 20b to each other. The first and second electrode tabs 420 and 430 may include first portions 420a and 430a extending from one end of the first electrode assembly 20a, second portions 420b and 430b extending from the other end of the second electrode assembly 20b so as to face the opposite direction to the first portions 420a and 430a, and third portions 420c and 430c provided to correct the first and second electrode assemblies 20a and 20b, respectively. The third portions 420c and 430c of the first and second electrode tabs 420 and 430 may be provided to pass through the space portion 21 of the battery case 410.

The battery case 410 includes an electrolyte injection portion 440 provided in parallel with the space portion 21. An electrolyte is injected into the battery case 410 through the electrolyte injection portion 440 so as to be uniformly spread in the battery case 410. The electrolyte is uniformly permeated into the first and second electrode assemblies 20a and 20b. The secondary battery 400 according to this embodiment is provided with a plurality of first and second electrode tabs 420a, 420b, 430a and 430b, protruding from each end respectively so that it is possible to perform charging/discharging operations at a high rate and to enable more efficient use of the secondary battery 400.

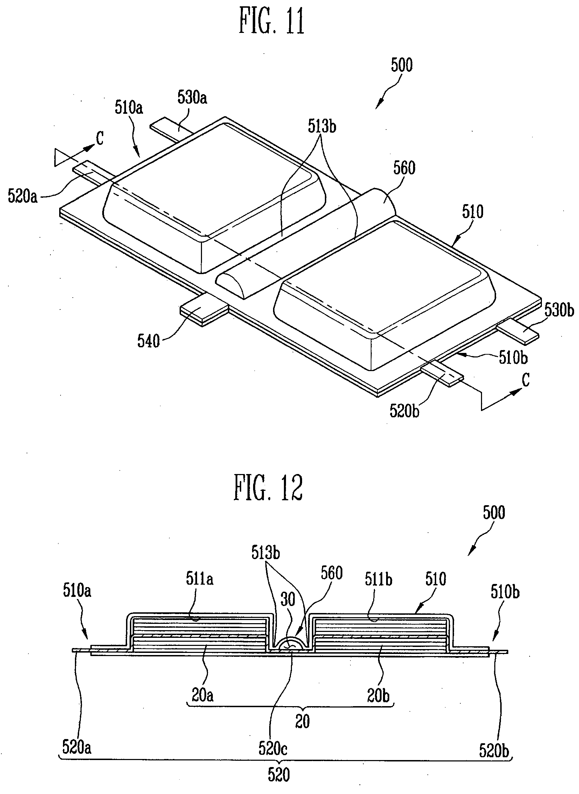

FIG. 11 is a perspective view of a secondary battery according to a fifth embodiment of the present invention. FIG. 12 is a sectional view taken along line C-C of the secondary battery of FIG. 11.

Referring to FIGS. 11 and 12, in the secondary battery 500 according to this embodiment, a battery case 510 may further include an electrolyte storage portion 560 between the first and second electrode assemblies 20a and 20b for storage of an electrolyte 30. An electrolyte injection portion 540 is provided to the battery case 510 so as to be connected to the electrolyte storage portion 560. Pairs of first and second electrode tabs 520a, 520b, 530a and 530b may extend from both ends 510a and 510b of the battery case 510, respectively.

As a secondary battery is charged and discharged several times, the electrolyte is exhausted by side reactions, and therefore, the lifespan of the secondary battery is decreased. However, in the secondary battery 500 according to this embodiment, surplus electrolyte 30 may be stored in the electrolyte storage portion 560. Thus, the secondary battery 500 in which the electrolyte is exhausted due to its use for a certain period of time can use the electrolyte stored in the electrolyte storage portion 560 for the purpose of supplement electrolyte, thereby increasing the lifespan of the secondary battery 500.

The electrolyte storage portion 560 may be provided using a process such as deep drawing. In the battery case 510, one or more internal sealing portions 513b may be provided between the electrolyte storage portion 560 and first and second accommodating portions 511 a and 511b for respectively accommodating the first and second electrode assemblies 20a and 20b therein. The internal sealing portions 513b are sealed, for example, by thermal bonding. In this case, the first and second electrode tabs 520c and 530c for connecting the first and second electrode assemblies 20a and 20b to each other are arranged to pass through the internal sealing portions 513b and then to be thermally bonded.

The internal sealing portion 513b enables spaces between the electrolyte storage portion 560 and the first and second accommodating portions 511a and 511b to be sufficiently bonded, but the degree of bonding in the internal sealing portion 513b may be changed depending on a position. A structural step difference is formed by the difference in thickness between the first and second electrode tabs 520c and 530c in the internal sealing portion 513b, and the step difference acts as interference in the bonding of the internal sealing portion 513b. Therefore, the degree of sealing of the parts through which the first and second electrode tabs 520c and 530c respectively pass in the internal sealing portion 513b may be relatively lowered as compared with the part through which the first and second electrode tabs 520c and 530c do not pass. When it is necessary to provide supplement electrolyte due to the exhaustion of the electrolyte as the secondary battery 500 is used, a partial leak of the internal sealing portion 513b may be induced by applying a slight physical force to the electrolyte storage portion 560 of the secondary battery 500. That is, the leak is relatively easily produced at the parts through which the first and second electrode tabs 520c and 530c respectively pass in the internal sealing portion 513b. The leak acts as a path of the electrolyte 30, and thus the
electrolyte 30 flows in the first and second accommodating portions 511a and 511b, thereby supplementing the electrolyte.

While the present invention has been described in connection with certain exemplary embodiments, it is to be understood that the invention is not limited to the disclosed embodiments, but, on the contrary, is intended to cover various modifications and equivalent arrangements included within the scope of the appended claims.

## Claims

1. A secondary battery comprising:
a plurality of electrode assemblies arranged in a layer, adjacent longitudinally to one another;
an electrolyte; and
a case accommodating the electrode assemblies and the electrolyte;
wherein an adjacent pair of the electrode assemblies are spaced apart to form a space portion therebetween,
wherein the space portion is arranged to receive the electrolyte for supply to the respective pair of electrode assemblies, and wherein the space portion is connected to an electrolyte injection port.

2. A secondary battery according to claim 1, wherein the case comprises a plurality of accommodating portions, each accommodating portion being arranged to house a respective electrode assembly.

3. A secondary battery according to claim 2, wherein each accommodating portion is formed to substantially correspond to the shape and size of the respective electrode assembly.

4. A secondary battery according to claim 2 or 3, wherein an internal sealing portion is provided between a respective pair of accommodating portions.

5. A secondary battery according to any preceding claim, wherein the electrode assemblies are provided with first and second electrode tabs arranged to extend through at least one of the electrode assemblies to electrically connect the electrode assemblies to one another and to protrude from at least one side of the case.

6. A secondary battery according to claim 5, when appended to claim 4, wherein the first and second electrode tabs are arranged to extend through the internal sealing portion.

7. A secondary battery according to claim 5 or 6 further comprising at least one spacer disposed in the space portion between a respective pair of electrode assemblies to support the first and second electrode tabs.

8. A secondary battery according to claim 7 wherein the at least one spacer is provided with a pair of recesses or a pair of through holes to receive the first and second electrode tabs.

9. A secondary battery according to any one of claims 5 to 8 wherein both ends of the first and second electrode tabs are arranged to protrude from the case.

10. A secondary battery according to any one of claims 2 to 9 further comprising an electrolyte storage portion for storing further electrolyte, the electrolyte storage portion being disposed between a pair of accommodating portions.

11. A secondary battery according to claim 10 wherein the electrolyte storage portion is connected to an electrolyte injection port.

12. A secondary battery according to claim 10 or 11, wherein a seal is provided between the electrolyte storage portion and each of the accommodating portions, wherein the seal may be opened by application of a force to the electrolyte storage portion.

13. A secondary battery according to any preceding claim wherein the case is provided with a safety device located corresponding to the space portion.

## Patentansprüche

1. Sekundärbatterie, umfassend:
eine Vielzahl von Elektrodenbaugruppen, die in einer Schicht längs nebeneinander angeordnet sind;
einen Elektrolyten; und
ein Gehäuse, das die Elektrodenbaugruppen und den Elektrolyten aufnimmt;
wobei ein angrenzendes Paar von Elektrodenbaugruppen durch einen dazwischen befindlichen Raumabschnitt voneinander beabstandet ist,
wobei der Raumabschnitt so angeordnet ist, dass er den Elektrolyten zur Versorgung des betreffenden Paares von Elektrodenbaugruppen aufnimmt und wobei der Raumabschnitt mit einer Elektrolyteinspritzöffnung verbunden ist.

2. Sekundärbatterie nach Anspruch 1, wobei das Gehäuse eine Vielzahl von Unterbungungsabschnitten umfasst, von denen jeder für die Unterbringung einer jeweiligen Elektrodenbaugruppe angeordnet ist.

3. Sekundärbatterie nach Anspruch 2, wobei jeder Unterbungungsabschnitt so ausgebildet ist, dass er der Form und Größe der jeweiligen Elektrodenbaugruppe entspricht.

4. Sekundärbatterie nach Anspruch 2 oder 3, wobei zwischen einem entsprechenden Paar ein interner Dichtungsabschnitt vorgesehen ist.

5. Sekundärbaterie nach einem der vorhergehenden Ansprüche, wobei die Elektrodenbaugruppen mit ersten und zweiten Elektrodenlaschen versehen sind, die so angeordnet sind, dass sie durch mindestens eine der Elektrodenbaugruppen verlaufen, um die Elektrodenbaugruppen elektrisch miteinander zu verbinden, und dass sie über mindestens eine Seite des Gehäuses herausragen.

6. Sekundärbatterie nach Anspruch 5, wenn an Anspruch 4 angehängt, wobei die ersten und die zweiten Elektrodenlaschen so angeordnet sind, dass sie durch den internen Dichtungsabschnitt verlaufen.

7. Sekundärbatterie nach Anspruch 5 oder 6, weiterhin aufweisend mindestens ein im Raumabschnitt zwischen einem entsprechenden Paar von Elektrodenbaugruppen angeordnetes Abstandsstück, um die ersten und zweiten Elektrodenlaschen zu stützen.

8. Sekundärbatterie nach Anspruch 7, wobei das mindestens eine Abstandsstück mit einem Paar von Ausnehmungen oder einem Paar von Durchgangsbohrungen zur Aufnahme der ersten und zweiten Elektrodenlasche versehen ist.

9. Sekundärbatterie nach einem der Ansprüche 5 bis 8, wobei beide Enden der ersten und der zweiten Elektrodenlaschen zum Herausragen aus dem Gehäuse angeordnet sind.

10. Sekundärbatterie nach einem der Ansprüche 2 bis 9, weiterhin aufweisend einen Elektrolytspeicherabschnitt zum Speichern von weiterem Elektrolyt, wobei der Elektrolytspeicherabschnitt zwischen einem Paar von Unterbringungsabschnitten angeordnet ist.

11. Sekundärbatterie nach Anspruch 10, wobei der Elektrolytspeicherabschnitt mit einer Elektrolyteinspritzöffnung verbunden ist.

12. Sekundärbatterie nach Anspruch 10 oder 11, wobei zwischen dem Elektrolytspeicherabschnitt und jedem der Unterbungungsabschnitte eine Dichtung vorgesehen ist, wobei die Dichtung durch Anwendung einer Kraft auf den Elektrolytspeicherabschnitt geöffnet werden kann.

13. Sekundärbatterie nach einem der vorhergehenden Ansprüche, wobei das Gehäuse mit einer Sicherheitsvorrichtung versehen ist, die entsprechend dem Raumabschnitt positioniert ist.

## Revendications

1. Batterie secondaire qui comprend :
une pluralité d'ensembles d'électrodes disposés en une couche, de manière longitudinalement adjacente les uns aux autres ;
un électrolyte ; et
une enceinte qui contient les ensembles d'électrodes et l'électrolyte ;
dans laquelle une paire adjacente d'ensembles d'électrodes est espacée afin de former un espace entre ceux-ci,
dans laquelle l'espace est prévu pour recevoir l'électrolyte à fournir à la paire respective d'ensembles d'électrodes, et dans laquelle l'espace est relié à un orifice d'injection d'électrolyte.

2. Batterie secondaire selon la revendication 1, dans laquelle l'enceinte comprend une pluralité de parties de logement, chaque partie de logement étant prévue pour contenir un ensemble d'électrodes respectif.

3. Batterie secondaire selon la revendication 2, dans laquelle chaque partie de logement est formée afin de correspondre sensiblement à la forme et à la taille de l'ensemble d'électrodes respectif.

4. Batterie secondaire selon la revendication 2 ou 3, dans laquelle une partie d'étanchéité interne est prévue entre une paire respective de parties de logement.

5. Batterie secondaire selon l'une quelconque des revendications précédentes, dans laquelle les ensembles d'électrodes sont munis de première et seconde languettes d'électrodes prévues pour s'étendre à travers au moins l'un des ensembles d'électrodes afin de relier électriquement les ensembles d'électrodes les uns aux autres, et pour faire saillie d'au moins un côté de l'enceinte.

6. Batterie secondaire selon la revendication 5, lorsqu'elle dépend de la revendication 4, dans laquelle les première et seconde languettes d'électrodes sont prévues pour s'étendre à travers la partie d'étanchéité interne.

7. Batterie secondaire selon la revendication 5 ou 6, comprenant en outre au moins un séparateur disposé dans l'espace entre une paire respective d'ensembles d'électrodes, afin de soutenir les première et seconde languettes d'électrodes.

8. Batterie secondaire selon la revendication 7, dans laquelle ledit au moins un séparateur est muni d'une paire d'évidements ou d'une paire de trous traversants destinés à recevoir les première et seconde languettes d'électrodes.

9. Batterie secondaire selon l'une quelconque des revendications 5 à 8, dans laquelle les deux extrémités des première et seconde languettes d'électrodes sont prévues pour faire saillie de l'enceinte.

10. Batterie secondaire selon l'une quelconque des revendications 2 à 9, comprenant en outre une partie de stockage d'électrolyte destinée à stocker un autre électrolyte, la partie de stockage d'électrolyte étant disposée entre une paire de parties de logement.

11. Batterie secondaire selon la revendication 10, dans laquelle la partie de stockage d'électrolyte est reliée à un orifice d'injection d'électrolyte.

12. Batterie secondaire selon la revendication 10 ou 11, dans laquelle un joint est prévu entre la partie de stockage d'électrolyte et chacune des parties de logement, le joint pouvant être ouvert en appliquant une force sur la partie de stockage d'électrolyte.

13. Batterie secondaire selon l'une quelconque des revendications précédentes, dans laquelle l'enceinte est munie d'un dispositif de sécurité qui se trouve à un emplacement qui correspond à l'espace.
